# EUROPEAN PATENT APPLICATION

(11) **EP 2 273 656 A2**
(43) Date of publication of application: **12.01.2011**
(21) Application number: 10251222.5
(22) Date of filing: 08.07.2010
(51) Int. Cl.: H02K 7/00, H02K 7/20

(54) **Nested exciter and main generator stages for a wound field generator**

(30) Priority: 08.07.2009 US 499292
(71) Applicant: Hamilton Sundstrand Corporation, Windsor Locks, CT 06096-1010 (US)
(72) Inventor: Himmelmann, Richard A., Beloit, WI 53511 (US)
(74) Representative: Tomlinson, Kerry John

(57) **Abstract**

A wound field generator (102) and a method of producing the wound field generator (102) with a nested exciter stage (307) and main generator stage (305) are provided. The wound field generator (102) includes an exciter stage rotor (310) coupled to a rotor member (312) and a main stage rotor (304) coupled to the rotor member (312). The wound field generator (102) also includes a rotating rectifier assembly (306) coupled to the rotor member (312) and electrically coupled to the exciter stage rotor (310) and the main stage rotor (304). The wound field generator further (102) includes an exciter stage stator (308) to establish field communication with the exciter stage rotor (310), and a main stage stator (302) to establish field communication with the main stage rotor (304). The exciter stage stator (308) and the exciter stage rotor (310) are radially nested about a central axis (316) of the wound field generator (102) with respect to the main stage stator (302) and the main stage rotor (304).

## Description

### BACKGROUND OF THE INVENTION

The subject matter disclosed herein generally relates to electrical generators, and more particularly to driveline installable generators.

An alternator generates electrical current by electromagnetic induction between a rotor and a stator. A rotating electromagnetic field induces an alternating electrical current into conductors wound in coils. The alternating current may then be converted into a direct current using, for example, a rectifier.

On ground-based vehicles, electrical generation may be accomplished through the use of pulley driven alternators. The electrical power produced by a pulley driven alternator is a function of the mechanical load that can be carried between an engine crankshaft and the pulley driven alternator. Ability to produce larger amounts of electrical power may be limited by the mechanical load constraints between the engine crankshaft and the pulley driven alternator.

### BRIEF DESCRIPTION OF THE INVENTION

According to one aspect of the invention, a wound field generator includes nested exciter and main generator stages. The wound field generator includes an exciter stage rotor coupled to a rotor member and a main stage rotor coupled to the rotor member. The wound field generator also includes a rotating rectifier assembly coupled to the rotor member and electrically coupled to the exciter stage rotor and the main stage rotor. The wound field generator further includes an exciter stage stator to establish field communication with the exciter stage rotor, and a main stage stator to establish field communication with the main stage rotor. The exciter stage stator and the exciter stage rotor are radially nested about a central axis of the wound field generator with respect to the main stage stator and the main stage rotor.

According to yet another aspect of the invention, a method for producing a wound field generator with nested exciter and main generator stages is provided. The method includes coupling an exciter stage rotor to a rotor member in the wound field generator, and coupling a main stage rotor to the rotor member. The method also includes electrically coupling a rotating rectifier assembly to the exciter stage rotor and the main stage rotor. The method further includes arranging an exciter stage stator to establish field communication with the exciter stage rotor in the wound field generator, and arranging a main stage stator to establish field communication with the main stage rotor in the wound field generator. The method additionally includes radially nesting the exciter stage stator and the exciter stage rotor in the wound field generator about a central axis of the wound field generator with respect to the main stage stator and the main stage rotor.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 illustrates an exemplary embodiment of a driveline system that includes a wound field generator installed in the driveline system;

FIG. 2 is an example of an electrical schematic for a wound field generator in accordance with exemplary embodiments;

FIG. 3 depicts a cut-away view of an exemplary embodiment of a wound field generator with nested exciter and main generator stages; and

FIG. 4 depicts a process for producing a wound field generator with nested exciter and main generator stages.

The detailed description explains embodiments of the invention, together with advantages and features, by way of example with reference to the drawings.

### DETAILED DESCRIPTION OF THE INVENTION

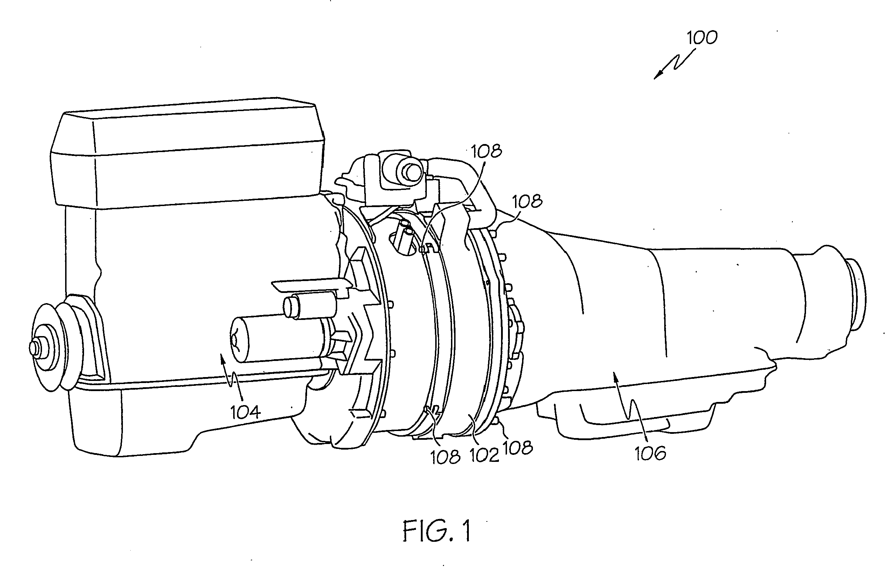

FIG. 1 illustrates an exemplary embodiment of a driveline system 100. In an exemplary embodiment, the driveline system 100 is part of a land-based vehicle driveline, such as a truck or a tank. The driveline system 100 includes a wound field generator 102 inserted between an engine 104 and a transmission 106. In an exemplary embodiment, the wound field generator 102 has coupling points 108 that align with existing coupling points on the engine 104 and transmission 106. Thus, the impact on existing components, such as the engine 104 and transmission 106, can be minimized when the wound field generator 102 is inserted into the driveline system 100. While the wound field generator 102 is depicted between the engine 104 and transmission 106, it will be understood that the arrangement of components on the driveline system 100 is not so limited. For instance, there may be additional components, such as a clutch inserted in the driveline system 100, or the wound field generator 102 may be coupled to the opposite end of the transmission 106 if a smaller diameter is desired for the wound field generator 102.

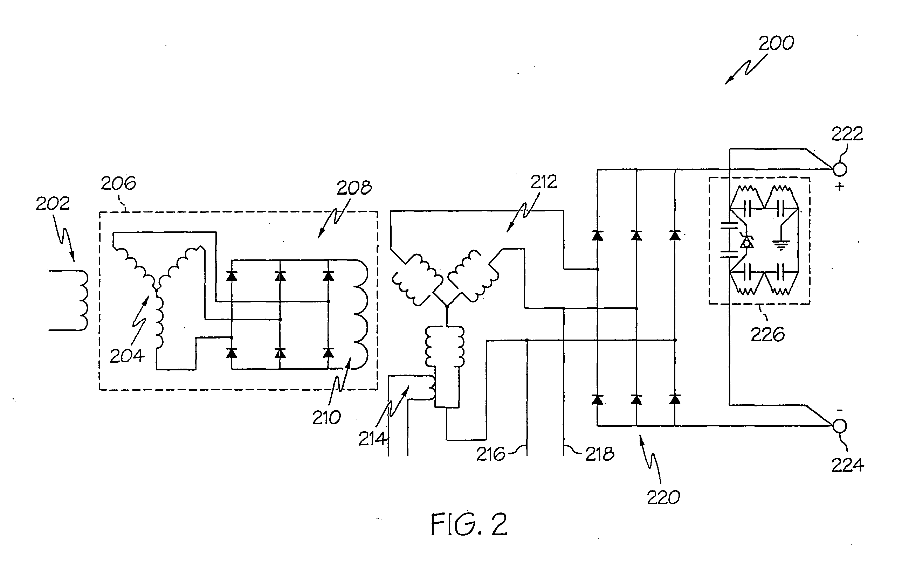

FIG. 2 depicts an example of an electrical schematic 200 for the wound field generator 102 of FIG. 1. The electrical schematic 200 includes an exciter coil 202 that establishes a direct current (DC) field. The exciter coil 202 may receive DC power from a DC supply, such as a battery or an alternator (not depicted). The exciter coil 202 can be implemented as an exciter stator, with conductive coils wrapped around an iron core. An exciter armature 204 receives an induced current from the DC field established by the exciter coil 202. The exciter armature 204 generates an alternating current (AC) as part of a rotating assembly 206 upon rotation through the DC field. The rotating assembly 206 also includes a rotating rectifier assembly 208 that converts the AC generated by the exciter armature 204 to DC. The AC-to-DC conversion may be performed using multiple diodes. A rotor coil 210 is coupled to the rotating rectifier assembly 208 to establish a main rotating DC field. In an exemplary embodiment, the rotor coil 210 is part of a main stage rotor, which includes conductive coils wrapped around an iron core to establish the main rotating DC field.

Main stage output coils 212 generate AC induced from the main rotating DC field of the rotor coil 210 as the rotor coil 210 rotates in proximity of the main stage output coils 212. In an exemplary embodiment, the main stage output coils 212 are part of a main stage stator of a wound field generator, which include conductive coils wrapped around an iron core. A current transformer 214 may be used to extract current from the main stage output coils 212 for test purposes or to provide AC power for other uses. Additional access points, such as access point 216 and access point 218, may also be used for testing or other purposes. AC generated by the main stage output coils 212 can be routed to an output rectifier assembly 220 to perform AC-to-DC conversion. The AC-to-DC conversion may be performed using multiple diodes for rectification. Junction point 222 and junction point 224 provide access to high voltage DC that is output from the output rectifier assembly 220. An electromagnetic interference (EMI) filter 226 may be connected between junction point 222 and junction point 224 to filter EMI effects, such as high frequency noise.

The components in FIG. 2 can be repeated multiple times and in varying scale to fit a number of geometries and power needs. For example, multiple coils can be distributed circumferentially about a central axis. The components of FIG. 2 can also be further partitioned into groups distributed between multiple physical locations. For instance, the output rectifier assembly 220 can be located remotely from the main stage output coils 212.

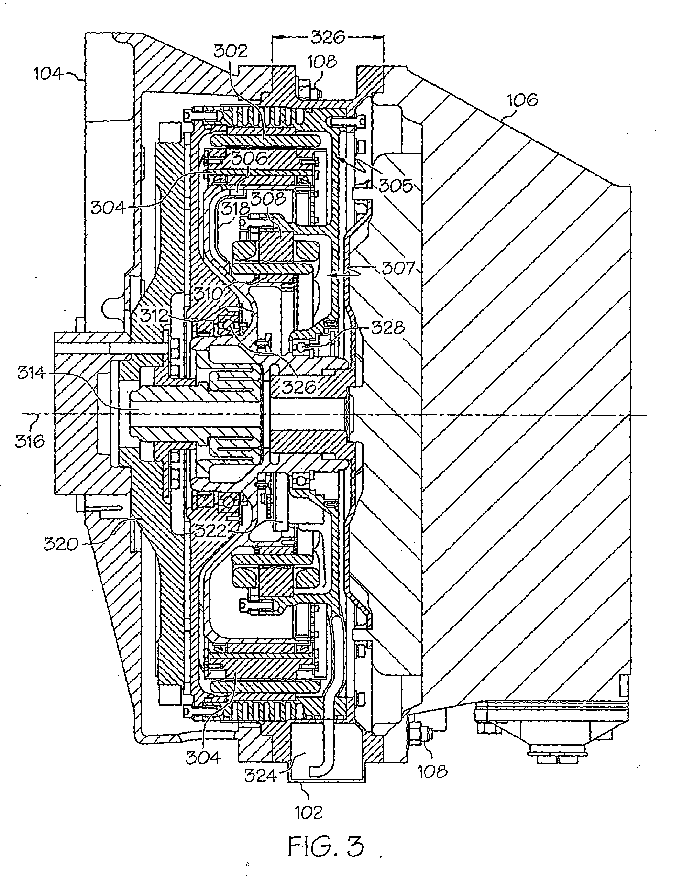

FIG. 3 depicts a cut-away view of an exemplary embodiment of the wound field generator 102 of FIG. 1. The wound field generator 102 of FIG. 3 includes a main stage stator 302 and a main stage rotor 304, which may be collectively referred to as main generator stage 305. A rotating rectifier assembly 306 can be used electrically to connect the main generator stage 305 with a nested exciter stage 307, which includes an exciter stage stator 308 and an exciter stage rotor 310. The main stage rotor 304 and the exciter stage rotor 310 are coupled to a rotor member 312, which is driven by the rotation of driveshaft 314. In an exemplary embodiment, the driveshaft 314 rotates about a central axis 316 of the wound field generator 102, causing the rotor member 312 to rotate. The main stage stator 302 and exciter stage stator 308 remain stationary as the rotor member 312 rotates. The rotating rectifier assembly 306 may be located in close proximity to the main stage rotor 304 or the exciter stage rotor 310 on the rotor member 312, and electrically coupled to both the main stage rotor 304 and the exciter stage rotor 310. A wire cover 318 may be used to hold wiring in support of the rotating rectifier assembly 306.

In an exemplary embodiment, the main stage stator 302 provides the electrical characteristics of the main stage output coils 212 of FIG. 2. The main stage rotor 304 may be electrically equivalent to the rotor coil 210 of FIG. 2. The rotating rectifier assembly 306 may be electrically equivalent to the rotating rectifier assembly 208 of FIG. 2. Additionally, the exciter stage stator 308 may be electrically equivalent to the exciter coil 202, and the exciter stage rotor 310 may be electrically equivalent to the exciter armature 204 of FIG. 2.

As the driveshaft 314 rotates, the rotor member 312 rotates the exciter stage rotor 310 in close proximity to the exciter stage stator 308, and the main stage rotor 304 rotates in close proximity to the main stage stator 302. Applying a DC source, such as current from a battery or alternator, to the exciter stage stator 308 results in a DC field to establish field communication inducing an alternating current in the exciter stage rotor 310 as the rotor member 312 rotates. Alternatively, a permanent magnet generator may be integrated into the wound field generator 102 to supply the DC source for the wound field generator 102, allowing the wound field generator 102 to be self-exciting. The alternating current in the exciter stage rotor 310 flows through the rotating rectifier assembly 306 to produce a direct current in the main stage rotor 304. The direct current in the main stage rotor 304 creates a DC field to establish field communication inducing an alternating current in the main stage stator 302 as the rotor member 312 rotates. The AC in the main stage stator 302 can be converted to DC via an external output rectifier assembly, such as the output rectifier assembly 222 of FIG. 2. AC power from the wound field generator 102 can also be used directly, for instance, in an AC distribution network. Thus, the wound field generator 102 can directly convert the mechanical rotation of the driveshaft 314 into a high-voltage DC power source and/or an AC power source.

As can be seen in FIG. 3, the main stage stator 302, main stage rotor 304, exciter stage stator 308, and exciter stage rotor 310 are arranged concentrically about the central axis 316, such that the exciter stage stator 308 and the exciter stage rotor 310 are radially nested about the central axis 316 of the wound field generator 102 with respect to the main stage stator 302 and the main stage rotor 304. This configuration results in minimal impact to the overall length of the driveline system 100 of FIG. 1 when the wound field generator 102 is inserted between the engine 104 and the transmission 106 and attached at coupling points 108. Driveline displacement 326 represents the addition in driveline length attributable to the wound field generator 102. In an exemplary embodiment, the driveline displacement 326 is less than 100 millimeters to install a version of the wound field generator 102 weighing approximately 64 kilograms and generating approximately 100 kilowatts of electrical power. It will be understood that a wide variety of sizes can be implemented within the scope of the invention.

The sequence in which the nested rotors and stators are spaced extending from the driveshaft 314 can vary within the scope of the invention. For example, the radial distance between the exciter stage rotor 310 and the central axis 316 may be less than the radial distance between the exciter stage stator 308 and the central axis 316 as depicted in FIG. 3. As an alternate configuration, the radial distance between the exciter stage rotor 310 and the central axis 316 can be greater than the radial distance between the exciter stage stator 308 and the central axis 316, for instance, reversing the relative position of the exciter stage stator 308 and the exciter stage rotor 310 depicted in FIG. 3. In similar fashion, the radial distance between the main stage rotor 304 and the central axis 316 can be less than the radial distance between the main stage stator 302 and the central axis 316 as depicted in FIG. 3. Conversely, the radial distance between the main stage rotor 304 and the central axis 316 may be greater than the radial distance between the main stage stator 302 and the central axis 316. As a further alternative, the relative positions of the main generator stage 305 and the nested exciter stage 307 can be reversed such that the radial distance between the main generator stage 305 and the central axis 316 is less than the radial distance between the nested exciter stage 307 and the central axis 316.

The driveshaft 314 may also be coupled to components of the engine 104 and transmission 106. For example, the driveshaft 314 is coupled to engine component 320 in FIG. 3, which may be a flywheel or other rotating component. The wound field generator 102 of FIG. 3 may also include other components to support operation of the wound field generator 102. For instance, a coolant pump 322 can be used to circulate a coolant and/or lubricant from a reservoir 324 up to various components of the wound field generator 102.

A plurality of bearings, such as bearings 326 and 328 may be used to support rotation within the wound field generator 102. The bearings 326 and 328 enable the wound field generator 102 to be self-supporting. In an alternate embodiment, a crankshaft in the engine 104 of FIG. 1 is directly coupled to the rotor member 312, where the rotor member 312 acts as a flywheel for the engine 104. In this embodiment, bearings 326 and 328 can be omitted, as crankshaft bearings in the engine 104 may be sufficient to support rotation of the rotor member 312. The main stage stator 302 and the exciter stage stator 308 can be directly coupled to the engine 104.

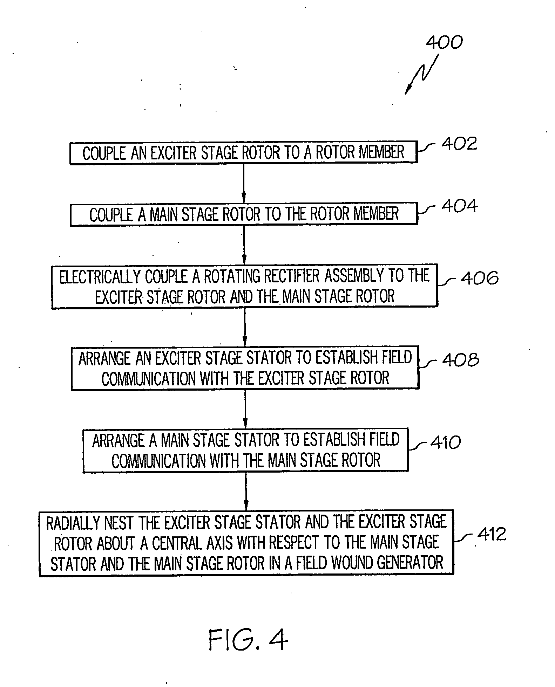

FIG. 4 depicts a process 400 for nesting exciter and main generator stages in a wound field generator, such as the wound field generators 102 of FIGs. 1 and 3. At block 402, exciter stage rotor 310 is coupled to rotor member 312 in the wound field generator 102. At block 404, main stage rotor 304 is coupled to rotor member 312. At block 406, rotating rectifier assembly 306 is electrically coupled to exciter stage rotor 310 and main stage rotor 304. At block 408, exciter stage stator 308 is arranged to establish field communication with exciter stage rotor 310 in the wound field generator 102. At block 410, main stage stator 302 is arranged to establish field communication with the main stage rotor 304 in the wound field generator 102. At block 412, exciter stage stator 308 and exciter stage rotor 310 are radially nested about central axis 316 of the wound field generator 102 with respect to main stage stator 302 and main stage rotor 304.

The wound field generator 102 produced via process 400 of FIG. 4 can be connected inline on driveline system 100 via coupling points 108, for instance, to couple the wound field generator 102 to engine 104 and a transmission 106. The engine 104, wound field generator 102, and transmission 106 may be driven by driveshaft 314 of FIG. 3. Various arrangements of the exciter stage rotor 310, exciter stage stator 308, main stage rotor 304, and main stage stator 302 can be used to place components closer or further from the central axis 316. Keeping components with a higher mass closer to the central axis 316 may affect the moment of inertia and other design/performance parameters of the wound field generator 102.

Technical effects include a driveline installable wound field generator with nested exciter and main generator stages to generate electrical power. Nesting exciter and main generator stages of the wound field generator results in a compact design that removes mechanical inefficiencies of pulley, gear, or chain drive systems. Nesting the wound field generator stages can also reduce driveline length as compared to cascaded generator stages along the driveline and/or use of a permanent magnet rotor. Using a wound field generator may lower overall system weight and cost as active rectification can be avoided, which may otherwise be employed in a permanent magnet system. If an inverter is used, the wound field generator can also be used as an integrated starter generator.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A wound field generator (102) with a nested exciter stage (307) and main generator stage (305), comprising:
an exciter stage rotor (310) coupled to a rotor member (312);
a main stage rotor (304) coupled to the rotor member (312);
a rotating rectifier assembly (306) coupled to the rotor member (312) and electrically coupled to the exciter stage rotor (310) and the main stage rotor (304);
an exciter stage stator (308) to establish field communication with the exciter stage rotor (310); and
a main stage stator (302) to establish field communication with the main stage rotor (304), wherein the exciter stage stator (308) and the exciter stage rotor (310) are radially nested about a central axis (316) of the wound field generator (102) with respect to the main stage stator (302) and the main stage rotor (304).

2. The wound field generator (102) of claim 1 further comprising coupling points (108) to connect the wound field generator (102) inline on a driveline system (100); preferably wherein the driveline system (100) further comprises an engine (104) and a transmission (106); more preferably wherein the engine (104), the wound field generator (102), and the transmission (106) are driven by a driveshaft (314).

3. The wound field generator (102) of claim 2 wherein the driveline displacement (326) in the driveline system (100) attributable to the wound field generator (102) is less than 100 millimeters.

4. The wound field generator (102) of any preceding claim wherein a first radial distance between the exciter stage rotor (310) and the central axis (316) is less than a second radial distance between the exciter stage stator (308) and the central axis (316).

5. The wound field generator (102) of any of claims 1 to 3 wherein a first radial distance between the exciter stage rotor (310) and the central axis (316) is greater than a second radial distance between the exciter stage stator (308) and the central axis (316).

6. The wound field generator (102) of any preceding claim wherein a first radial distance between the main stage rotor (304) and the central axis (316) is less than a second radial distance between the main stage stator (302) and the central axis (316).

7. The wound field generator (102) of any of claims 1 to 5 wherein a first radial distance between the main stage rotor (304) and the central axis (316) is greater than a second radial distance between the main stage stator (302) and the central axis (316).

8. A method for producing a wound field generator (102) with a nested exciter stage (307) and main generator stage (305), comprising:
coupling an exciter stage rotor (310) to a rotor member (312) in the wound field generator (102);
coupling a main stage rotor (304) to the rotor member (312);
electrically coupling a rotating rectifier assembly (306) to the exciter stage rotor (310) and the main stage rotor (304);
arranging an exciter stage stator (308) to establish field communication with the exciter stage rotor (310) in the wound field generator (102);
arranging a main stage stator (302) to establish field communication with the main stage rotor (304) in the wound field generator (102); and
radially nesting the exciter stage stator (308) and the exciter stage rotor (310) in the wound field generator (102) about a central axis (316) of the wound field generator (102) with respect to the main stage stator (302) and the main stage rotor (304).

9. The method of claim 8 further comprising:
connecting the wound field generator (102) inline on a driveline system (100) via coupling points (108).

10. The method of claim 9 wherein the driveline system (100) further comprises an engine (104) and a transmission (106); preferably wherein the engine (104), the wound field generator (102), and the transmission (106) are driven by a driveshaft (314).

11. The method of claim 9 or 10 wherein the driveline displacement (326) in the driveline system (100) attributable to the wound field generator (102) is less than 100 millimeters.

12. The method of any of claims 8 to 11 wherein a first radial distance between the exciter stage rotor (310) and the central axis (316) is less than a second radial distance between the exciter stage stator (308) and the central axis (316).

13. The method of any of claims 8 to 11 wherein a first radial distance between the exciter stage rotor (310) and the central axis (316) is greater than a second radial distance between the exciter stage stator (308) and the central axis (316).

14. The method of any of claims 8 to 13 wherein a first radial distance between the main stage rotor (304) and the central axis (316) is less than a second radial distance between the main stage stator (302) and the central axis (316).

15. The method of any of claims 8 to 13 wherein a first radial distance between the main stage rotor (304) and the central axis (316) is greater than a second radial distance between the main stage stator (302) and the central axis (316).
